# EUROPEAN PATENT APPLICATION

(11) **EP 2 816 512 A1**
(43) Date of publication of application: **24.12.2014**
(21) Application number: 14002071.0
(22) Date of filing: 16.06.2014
(51) Int. Cl.: G06Q 10/10, G06Q 50/00

(54) **Automated sourcing and screening of candidate profiles**

(30) Priority: 18.06.2013 US 201313920092
(71) Applicant: Successfactors, Inc., South San Francisco, CA 94080 (US)
(72) Inventor: Menon, Krishnadas, South San Francisco, CA 94080 (US); Muthiah, Balaarjunan, South San Francisco, CA 94080 (US); Kamadolli, Sunil, South San Francisco, CA 94080 (US)
(74) Representative: Müller-Boré & Partner Patentanwälte PartG mbB

(57) **Abstract**

Various embodiments of systems and methods for automatically sourcing and screening candidate profiles are described herein. The method involves receiving authorization from a participant to access the participant's account on a social networking system. Further, the profiles corresponding to the one or more candidates connected to the participant in the social networking system are extracted and scored according to a degree of match between the profile data associated with each extracted profile and a candidate search data. The candidate search data defines a set of criteria qualifying a candidate for a particular job position. In another aspect, the extracted profiles are ranked based on the scores assigned to each of the extracted profiles and a feedback form is sent to a participant in response to receiving a selection of a profile associated with the participant.

## Description

### FIELD

This application relates generally to candidate profile screening systems and more particularly to a technology for automatically sourcing and screening candidate profiles from online social networking systems.

### BACKGROUND

Recruiting the right employee in a cost and time effective manner is vital to an organization's growth and sustainability. However, the task of gathering candidate profiles and identifying the right match from the gathered profiles can be labor intensive and challenging. One of the means of achieving this is by using technology to make the hiring process faster and simpler. However, the key barrier to the success of conventional employee referral programs is employee participation. The need for an employee to be personally involved in acts such as reading through the job posts, identifying relevant social connections, obtaining contact information or resume of the relevant social connections, submitting the contact information or resume to the employee referral app., etc., discourages the employees from actively participating in such programs. The result is a loss of potential candidates for a job opening. Moreover, the recruiting apps available in the market do not provide for screening the candidate profiles by considering any overlapping acquaintanceship of the candidates with the current employees.

### SUMMARY

Various embodiments of systems and methods for automatically sourcing and screening candidate profiles are described herein. In an aspect, the method involves receiving authorization from a participant to access the participant's account on a social networking system, where the participant is connected to one or more candidates in the social networking system. Further, the method includes extracting profiles corresponding to the one or more candidates that are connected to the participant in the social networking system. In an aspect, the profile data within each of the extracted profiles are classified into one or more categories. Further, each of the extracted profiles is scored according to a degree of match between the profile data associated with each extracted profile and a candidate search data. The candidate search data defines a set of criteria expected from a candidate profile. In another aspect, the extracted profiles are ranked based on the scores assigned to each of the extracted profiles. In yet another aspect, a feedback form is sent to the participant in response to receiving a selection of at least one of the ranked profiles.

These and other benefits and features of embodiments-will be apparent upon consideration of the following detailed description of preferred embodiments thereof, presented in connection with the following drawings.

### BRIEF DESCRIPTION OF THE DRAWINGS

The claims set forth the embodiments with particularity. The embodiments are illustrated by way of examples and not by way of limitation in the figures of the accompanying drawings in which like references indicate similar elements. The embodiments, together with its advantages, may be best understood from the following detailed description taken in conjunction with the accompanying drawings.
**FIG. 1** is a conceptual diagram of a technique for automated sourcing and screening of candidate profiles, according to one embodiment.
**FIG. 2** is a flow diagram of a method for automatically sourcing and screening candidate profiles, according to one embodiment.
**FIG. 3** illustrates a block diagram of an exemplary system implementing a candidate profiles sourcing and screening process, in accordance with an embodiment.
**FIG. 4** illustrates an exemplary interface showing a candidate profiles screening process, in accordance with an embodiment.
**FIG. 5** illustrates an exemplary interface showing a candidate profiles scoring table, in accordance with an embodiment.
**FIG. 6** illustrates a graphical representation of the candidate profiles and associated participant connections, in accordance with an embodiment.
**FIG. 7** illustrates a graphical representation of the candidate profiles and associated participant connections, in accordance with another embodiment.
**FIG. 8** is a block diagram of an exemplary computer system according to one embodiment.

### DETAILED DESCRIPTION

### Overview

Embodiments of techniques for automatically sourcing and screening candidate profiles are described herein. In the following description, numerous specific details are set forth to provide a thorough understanding of the embodiments. One skilled in the relevant art will recognize, however, that the embodiments can be practiced without one or more of the specific details, or with other methods, components, materials, etc. In other instances, well-known structures, materials, or operations are not shown or described in detail.

Reference throughout this specification to "one embodiment", "this embodiment" and similar phrases, means that a particular feature, structure, or characteristic described in connection with the embodiment is included in at least one of the one or more embodiments. Thus, the appearances of these phrases in various places throughout this specification are not necessarily all referring to the same embodiment. Furthermore, the particular features, structures, or characteristics may be combined in any suitable manner in one or more embodiments.

Social networking communities, i.e., social structures hosted on social networking systems are made up of individuals ("members") and a complex set of dyadic ties between these individuals. Online social networking systems provide a web-based services, platform, or site for facilitating the building of social relations ("connections") among the members who may for example, share interests, activities, backgrounds, or real-life connections. Some of the web-based services include providing a representation of each member (often a profile), his/her social links, and means for members to interact over the internet, such as e-mail, instant messages, media streaming, etc. Examples of online social networking systems include Facebook.com, MySpace.com, LinkedIn.com, and EsqChat.com, where communities of individuals having virtual identities are enabled to connect and interact with other individuals. In addition to serving as a platform for members to meet and interact with fellow members, the online social networking systems facilitate the conglomeration of individuals with diverse social and professional backgrounds.

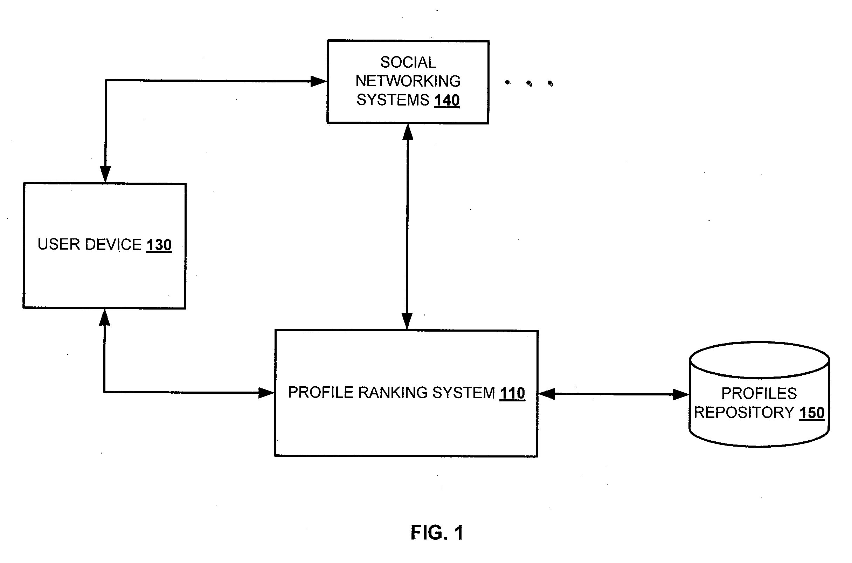

Current employees of an organization can help the organization identify and recruit talent. The current employees may have worked with prospective employees who they think would be a good fit for the organization. Based on their past experiences with the prospective employees, the current employees may be able to provide insights into the prospective employees such as specific skills the prospective employees might have, personality traits, whether the prospective employees would be compatible with an organization's culture or get along with certain individuals in a group, and the type of positions the prospective employees would be interested in. The insights provided by the current employees help an organization identify the best employee candidates as well as filter out undesirable employee candidates. Social networking systems have become an important source of human resources due to the availability of information about relationships of users of the social networking service. In an example scenario, a recruitment team of an organization providing talent acquisition services for various departments of the organization, may, in order to identify a suitable candidate for job position, invite the current employees of the organization to sign up for a referral program hosted in a referral system. By signing up for the referral program, the employees authorize the recruitment personnel to access the social networking communities to which the employees are members to. The profiles of other members that are connected to the employees through the social networking community are accessed and a repository of such profiles is created. The repository then forms a candidate pool from which the recruitment personnel can identify suitable candidates for the job position. The concept of sourcing candidate profile and screening the candidate profiles from online social networking systems is described with reference to a conceptual system shown in FIG. 1.

### System Overview

FIG. 1 is a high level block diagram illustrating a system environment, in accordance with one embodiment. The system environment comprises one or more user devices 102, a profile ranking system 110, a profile repository 150, and one or more social networking system 140. In some embodiments, the profile ranking system 110 is implemented as a single server, while in other embodiments it is implemented as a distributed system of multiple servers. For convenience of explanation, the profile ranking system 140 is described below as being implemented on a single server system. For purposes of illustration, the embodiment shown by FIG. 1 includes a single profile ranking system 110, a single user device 130, and a single profiles repository 150. However, in other embodiments, the environment may include more user devices 130 and/or more profile ranking system 110, and one or more profiles repositories 150.

The profile ranking system 110 is communicatively coupled to a user device 130, the one or more social networking system 140 and the profiles repository 150.

A user interacts with the profile ranking system 110 and/or social networking systems 140 using a user device 130, which may be any suitable device that is capable of connecting to the profile ranking system 110 and/or social networking system 140. Examples of the user device 130 include a computer, Laptop, a Smartphone, a Personal Digital Assistant, a Notepad, Notebook, and Tablet PC. The user device is accessed by multiple participants who are members to an entity operating the profile ranking system 110.

In an example embodiment, the profile ranking system 110 is operated by the recruiting team of the organization and the participants are the employees of the organization. The participants are in turn members of online social networking communities hosted by one or more online social networking systems 140. The participants have an individual account and a virtual identity for each of the online communities that they are members of. The term "virtual identity" as used herein refers to a name, e-mail ID, login ID, or any other textual or graphical data that uniquely represents a member of an online social networking community. The participant's social networking account includes a web page that holds a "profile" of the participant that is partially or wholly visible to one or more other members ("connections") that are connected to the participant in the social networking community. The participant's profile includes such information as the participant's contact information, academic background, employment history, current employer, skills, interests, hobbies, content posted by the participant, status updates, and other biographical data. Similarly, each of the participant's connections also has an individual profile in their respective accounts which can be viewed and accessed by the participant.

The participant being an owner of his/her account, may add a member of the community as a contact (the term "contact" having a meaning analogous to "friend" on Facebook.com or Myspace.com, or to "connection" on LinkedIn.com), whereby the added member would be a contact of the participant (and vice versa), such that, the participant can view additional web pages and/or information created by the added member from the added member's profile (and vice versa, respectively). After being added as a contact by the participant, the added member's virtual identity and profile are accessible to the participant from the participant's account. For example, the participant, can select an icon or link from his/her account, causing a web page displaying a list of links to the profiles of all contacts of the participant to be rendered, which links could be listed in alphabetical order based on the last name (or first name) of the contacts corresponding to the links, or based on other ranking criteria.

A participant in a referral program (i.e., employee of an organization) may initiate the referral process by simply authorizing the organization to access their social networking information. In an aspect, in order to access the participant's social networking information, the profile ranking system employs authorization standards such as OAuth. Such authorization standards provide for the participant to authorize third-party access to his/her server resources without sharing his/her credentials (typically, a username and password pair), using user-agent redirections. Using such authorization standards a client (herein, the profile ranking system) can access server resources on behalf of an end-user (herein, the participant). For example, when the participant signs up for the referral program, the participant is prompted by an application to grant access to the participant's social data stream. The participant may then trust his/her social networking information with the application by selecting an authorization option, for e.g., "I authorize" provided by the application on a user interface. The profile ranking system 110 may also send a request to a social networking system 140 for a participant's social information. The social networking system 140 may then send a request to the participant for authorization.

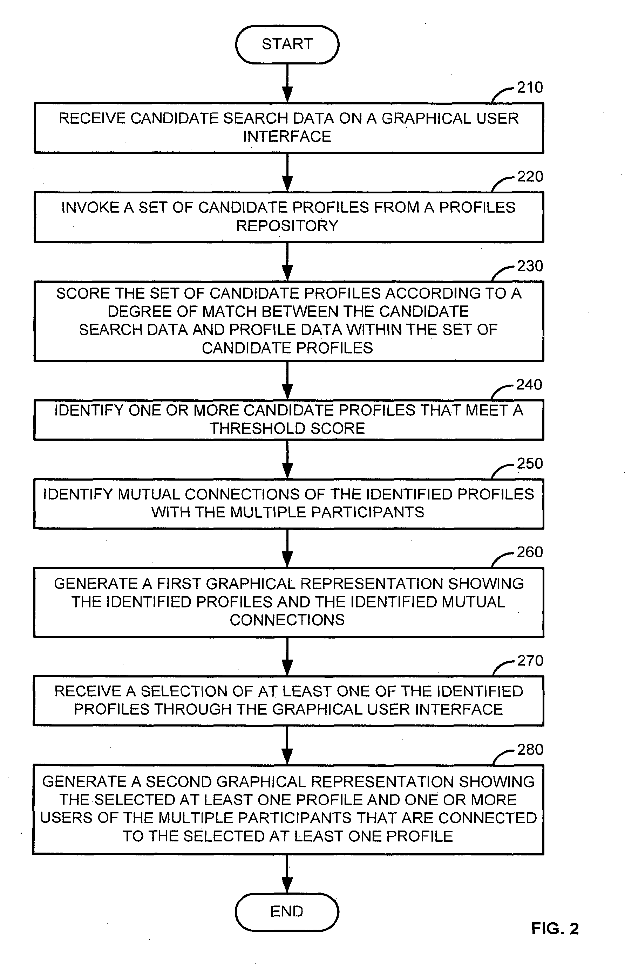

Referring back to FIG. 1, the user device 130 provides an interface for the participants to sign up for a referral program. In some embodiments, the referral program involves a one-time participation of the participants, where, by signing up for the program the participants provide authorization to the ranking system to access the participant's social networking communities. For example, a participant may sign up for the referral program by accessing a link or icon to the referral program's web page or any other form of communication interface. Once in the webpage or communication interface the participant can provide the names of social networking systems and his/her virtual identities in the identified social networking systems. In response to receiving the authorization from the participants, the profile ranking system automatically accesses the social networking systems that the participants are associated with. The ranking system then accesses the participant's connections within the community, provided that the privacy settings of the connections allow such access, and extracts the profiles corresponding to the connections. The profiles thus extracted are stored in the profiles repository 150 for further screening and analysis. The method of screening the profiles and graphically representing the profiles and their ranking is described with reference to FIG. 2.

### Process Overview

FIG. 2 illustrates a flow diagram of a method 200 for automatically sourcing and screening candidate profiles from social networking systems. Portions of process 200, as shown in FIG. 2, are performed at a system (e.g., profile ranking system 110) having one or more processors and non-transitory memory, which stores one or more instructions to be executed by the one or more processors of the system. The method 200 involves receiving candidate search data, at process block 210. In some embodiments, the candidate search data are received via a graphical user interface provided to a user's device. In an aspect, the candidate search data is a title of a particular job position, e.g., a "UI Engineer." In another aspect, the candidate search data may include criteria defining the professional qualifications required for a particular job position. The criteria defining professional qualifications may specify educational requirements (e.g., certain types of degrees or degrees from certain educational institutions), professional skills (e.g., Java, PHP), language skills (e.g., the ability to read and write German), geographic location, years of work experience, and work history (e.g., experience working at specific companies), personal interests (e.g., hiking), professional interests (e.g., mobile applications) or any combination thereof. For example, the professional qualifications may specify an engineer from the state of California with at least three years of work experience, has Javascript and HTML5 skills, speaks Spanish and has an interest in horror movies. The term "job position" as used herein refers to a specific role in an organization which is currently open to be filled by a candidate. The criteria defining the professional qualifications may be entered directly into a GUI by personnel performing a candidate search. Alternatively, the job title may be entered and the criteria defining the professional qualifications may be automatically generated by the profile ranking system based on pre-defined rules. For example, a job title or job position may be entered and the pre-defined rules may specify the level of experience and expertise required for a particular grade level to which the job position applies.

The profiles repository is accessed and a set of candidate profiles is invoked, at process block 220. In some embodiments, the set of candidate profiles is identified based on the candidate search data or criteria included in the candidate search data. In some embodiments, the profile repository is accessed and the set of candidate profiles is invoked responsive to receiving the candidate search data. In some embodiments, the set of candidate profiles is identified, accessed and retrieved from the profiles repository. The profiles repository stores profiles of candidates who are connected to participants of a referral program, through online social networking systems. In an aspect, the set of candidate profiles are invoked based on the relevance of the candidate profiles to the job position. In an aspect, the relevance is determined based on identifying key terms in the candidate profiles, where the key terms are determined from the candidate search data.

Further, at process block 230, the invoked candidate profiles are scored according to a degree of match between the candidate search data and profile data within the set of candidate profiles. In an aspect, the candidate search data is classified into multiple categories such as skills, work experience, education, roles, and mutual employee connections. The mutual employee connections criteria may be further classified into no. of mutual employee connections, designation of mutual employee connections, domain of mutual employee connections, overlapping work experience with mutual employee connections.

Similarly, the information (profile data) provided in each of the invoked candidate profiles are classified into multiple categories as those of the candidate search data. The profile data within each of the candidate profiles is compared with the candidate search data and a category by category match is determined. Based on a category-wise degree of match, each of the candidate profiles is scored. For example, a higher score is assigned to a candidate profile that has a greater degree of match between the profile data and the candidate search data as compared to another candidate profile that has a lesser degree of match between the profile data and the candidate search data. For example, if the candidate search data specifies "Marketing Executive with at least ten years of experience," then those candidate profiles corresponding to candidates who have held a marketing executive position and with a minimum of ten years of experience will be assigned a higher score than other profiles that do not meet the requirement specified in the candidate search data. Specifically, the profile data within the category Roles, and Work experience is compared to the candidate search data classified as Roles and Work experience in order to determine the degree of match. In an embodiment, different weights are assigned to each of the multiple categories of the candidate search data. The candidate profiles are then scored based on determining a degree of match between the profile data and the candidate search data in each category and a score is assigned according to the degree of match and based on the weight assigned to that category. The weights and criteria which are inputs to the ranking system are configurable.

At process block 240, the candidate profiles that meet a threshold score are identified. In an aspect, the threshold score is a reference value, where profiles having a score equal to or greater than the reference value are deemed to have met the threshold score. The candidate profiles may be ranked in an ascending or descending order according to their respective scores and provided as a ranked list for further processing and/or analysis.

Further, at process block 250, the process determines whether the candidate profiles that meet the threshold scores have mutual connections with multiple participants. In other words, it is determined whether the identified candidate profiles are connected to two or more of the multiple participants of the referral program. For example, a candidate profile may belong to a candidate who is a connection (or "Friend") of a first participant on an online social network and also a connection of a second participant on the same or different online social network. Similarly, the candidate may be a connection to multiple other participants of the referral program. In an aspect, the mutual connections are identified based on determining that two or more participants of the referral program are linked to the same candidate profile. Also, the two or more participants serve as channels for the particular candidate profile from the online social networking system to the repository.

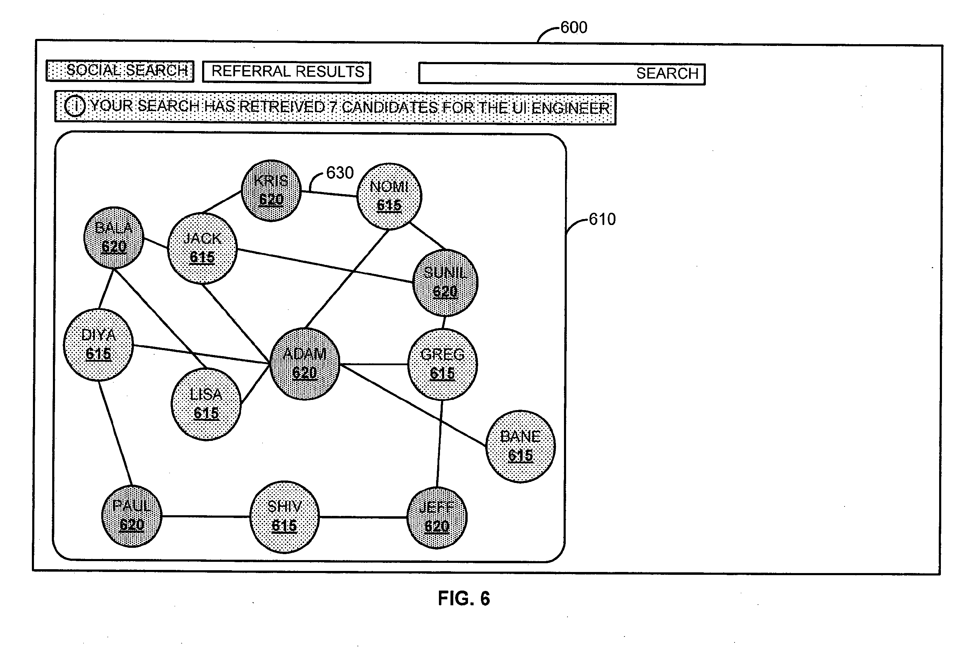

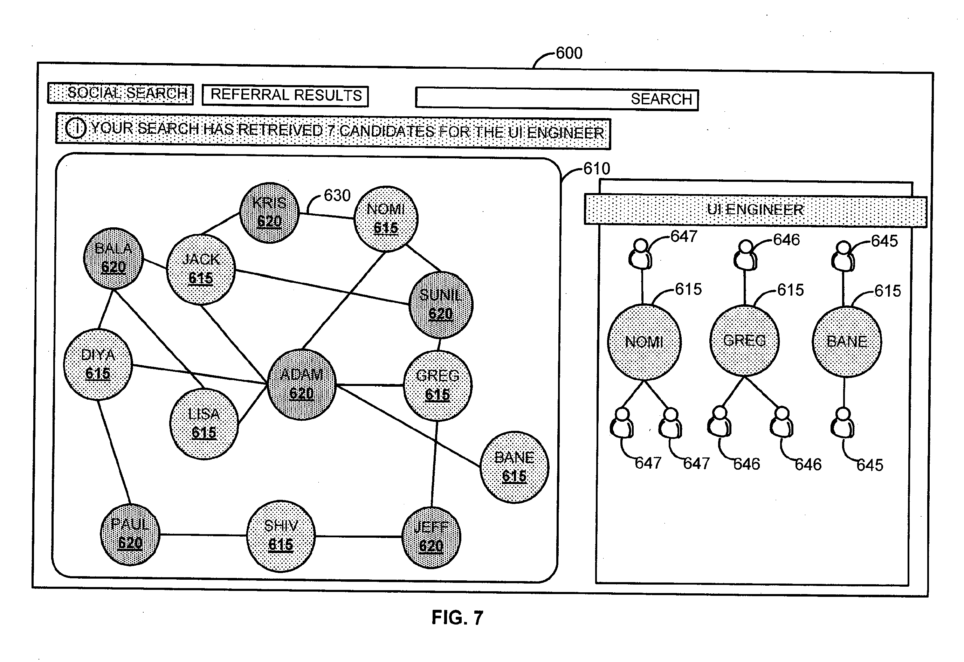

At process block 260, in an embodiment, a first graphical representation including the identified profiles and the mutual employee/participant connections corresponding to each of the identified profiles is generated. The first graphical representation is provided to be displayed on a graphical User Interface (GUI). At process block 270, a selection of one or more of the identified profiles is received through the GUI and in response a second graphical representation is generated. The second graphical representation shows the selected one or more identified profiles and connections to participant(s) that are connected to the one or more identified profiles. The graphical representations will be described in more detail with reference to FIGS. 6 and 7.

Further, in response to receiving a selection of one or more participants connected to a particular candidate profile, a feedback form is automatically sent to the selected one or more participants for appraisal of the candidate associated with the candidate profile. In an aspect, a participant may be selected based on a business relevance of the participant with the particular job position. The business relevance of the participant may be determined based on the individual scores assigned to the categories, namely, designation of mutual employee connections, domain of mutual employee connections, overlapping work experience with mutual employee connections etc., at process block 230. In an example, for a job position of a Business Analyst, four participants are connected to a candidate profile. If each of the four participants is employed in various functions of the organization such as HR, Marketing, Business Development, and Product development respectively, the feedback form is likely to be sent to the participant from Business Development. Alternatively, the business relevance of the participant may be determined separately using a participant score. In an aspect, the participant score is calculated based on assessing the designation of the participant in the organization, participant's period of employment with the organization, relevance of the domain in which the participant is employed in, etc. For example, a participant employed in a higher grade level than that of the job position may have a higher participant score than a participant employed in a lower or similar grade level. Similarly, a participant who has been employed in the organization for over five years may be scored higher than a participant that is employed for 1 year in the organization.

### Candidate Profile Sourcing and Screen

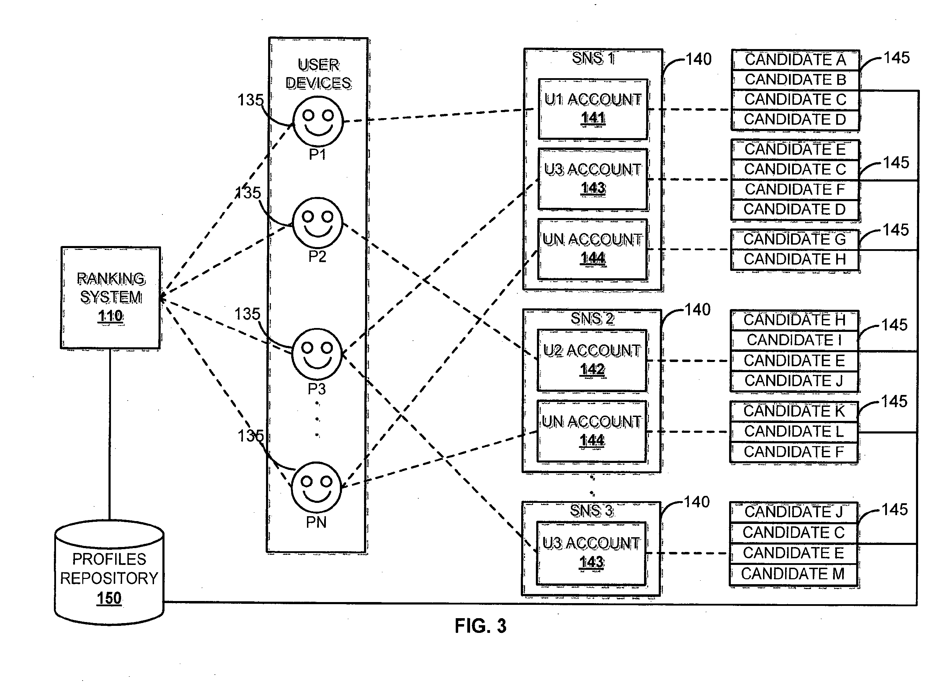

FIG. 3 illustrates a block diagram of an exemplary system implementing a candidate profiles sourcing and screening process. The system 300 includes a profile ranking system 110 communicatively coupled to one or more user devices 130. The one or more user devices 130 are accessed by one or more participants (P1, P2, P3, and Pn) 135 of a referral program. In an aspect, the referral program is hosted by an entity employing the profile ranking system 110. The one or more participants 135 have virtual user accounts 141, 142, 143, and 144 (U1, U2, and Un (n = any progressive number)) on one or more online social networking systems 140. Each of the virtual user accounts U1, U2, and Un of the one or more participants 135 includes information identifying candidate profiles 145 of one or more other members ("candidates") that are connected to the participants 135 in the social networking system 140.

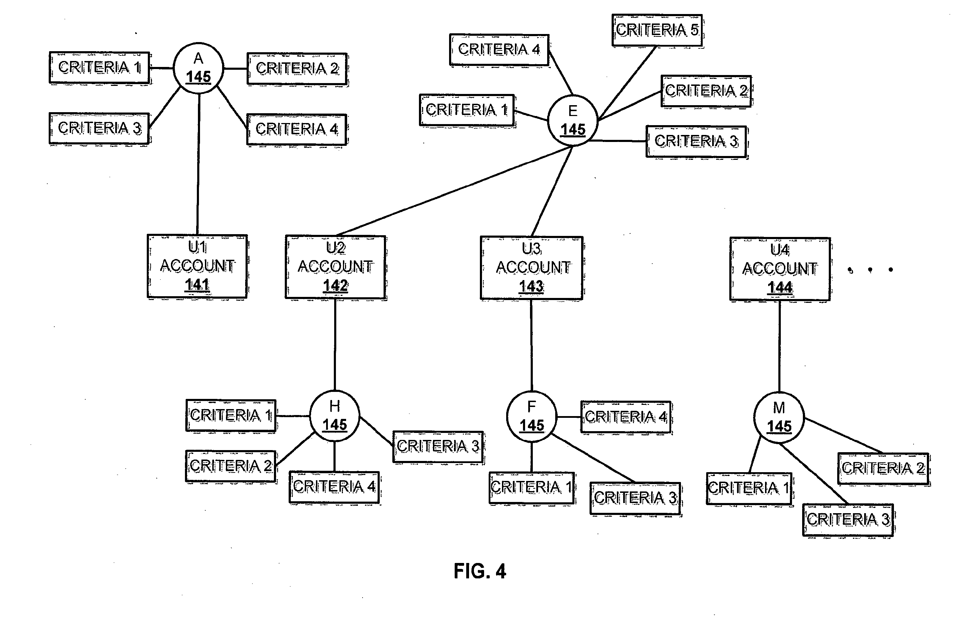

In an embodiment, the profile ranking system 110 is a computer having a processor that executes software instructions or code comprising a profile sourcing and screening tool, stored on a computer readable storage medium, to perform the processes illustrated with reference to FIGS. 4-7. The profile ranking system 110 includes a media reader to read instructions from the computer readable storage medium and store the instructions in storage or in random access memory (RAM). For example, the computer readable storage medium includes executable instructions for performing operations including, but not limited to, receiving authorization from one or more participants 135 of the referral program to access the virtual accounts 141, 142, 143, or 144 (U1, U2, or Un) corresponding to the participants 135; accessing the candidate profiles 145 corresponding to the members connected to the participants 135 in the social networking systems 140; and storing the candidate profiles 145 in the profiles repository 150.

Further, the computer readable storage medium includes executable instructions for receiving candidate search data; invoking a set of candidate profiles from the profiles repository 150; scoring the invoked candidate profiles based on a degree of match between the candidate search data and profile data; identifying candidate profiles that meet a threshold score; identifying mutual connections of the identified profiles with multiple participants; generating a first graphical representation of the identified profiles and the mutual connections of the identified profiles with multiple participants; receiving a selection of one or more of the identified profiles through the graphical user interface; generating a second graphical representation showing the selected profile(s) and a linking of the selected profile(s) with one or more participants; and in response to receiving a selection of a participant in the second graphical representation, automatically sending a feedback form to the selected participant for appraising the candidate associated with the candidate profile linked to the participant.

In an aspect, the profiles repository 150 is a storage medium internal to the computer. The profiles repository 150, apart from storing the candidate profiles, holds information relating to the source of each candidate profile, i.e., information relating to the participant's virtual account and social networking system from which the candidate profile was received. For example, the profile repository may hold information such as the virtual identity of the participant for the virtual account, the name of the online social networking system, the type of relationship with the candidate, etc. The processor, may, in order to identify the mutual connections of a candidate profile with multiple participants, invoke a mapping of the virtual identities of participants with actual names of the participants in the referral program, from a memory location in the computer. The mapping is generated and/or maintained at the time when a participant signs up for the referral program and he/she provides information regarding his/her virtual identities and the names of the online social networking systems that the participant is member to. From the mapping, the processor determines whether a candidate profile has two or more participants connected to the candidate associated with the candidate profile.

In an example, as shown in FIG. 3, a participant P1 is connected to candidates ("members") A, B, C, and D through his/her virtual user account 141 (U1). Candidate C, however, is also connected to participant P3 through participant P3's virtual user account 143 (U3) in a first social networking system (SNS1) and a third social networking system (SNS3). Similarly, Candidate E is connected to both participants P2 and P3 via corresponding virtual user accounts 142 (U2) and 143 (U3) on social networking systems 140 (SNS1, SNS2, and SNS3).

In an embodiment, the processor of the ranking system 110, in response to receiving a candidate search data, invokes a set of candidate profiles from the profiles repository 150. As shown in an example with reference to FIG. 4, candidate profiles 145 A, H, E, F, and M associated with candidates connected to participant user accounts U1, U2, U3, and U4 are invoked from the profiles repository. As mentioned above, the candidate profiles A, H, E, F, and M may be selected based on a preliminary screening of the profiles based on a relevance of the candidate profiles to the job position. The relevance of the candidate profiles is determined based on candidate search data. The candidate search data defines criteria that qualify a candidate for the job position. For example, if the criteria in the candidate search data specifies product management experience, a computer science degree and java programming skills, preliminary candidate profiles would be identified based on these criteria. In an aspect, the preliminary screening is performed by identifying key terms in the profile data from each of the candidate profiles. The key terms may be determined from the candidate search data. For example, the criteria in the candidate search data may specify someone with marketing experience and profiles that include the key term marketing may be selected in the preliminary screening.

The candidate profiles A, H, E, F, and M, hold personal and professional information (profile data) relating to the candidates associated with each profile. The profile data is classified into multiple categories according to a classification of the candidate search data. For example, if the candidate search data is classified into categories such as skills, work experience, education, roles, mutual employee connections, etc., then the profile data within each of the profiles A, H, E, F, and M is also classified into similar categories. In an aspect, the profile data is classified automatically following the selection of the candidate profiles A, H, E, F, and M based on the preliminary screening. The profile data can be automatically classified based on matching headers of the categories in the candidate search data and the profile data if the profile data is already classified into similar categories in the profile as rendered by the social networking system. On the other hand, however, if the profile data is not classified or is classified into a set of categories different from those of the candidate search data, then the processor automatically performs a classification of the profile data based on detecting in the profile data, key terms identified from the criteria provided under each category in the candidate search data.

Once the profile data within each of the profiles A, H, E, F, and M is classified into multiple categories, the processor performs a category-wise comparison of the candidate search data and the profile data to evaluate a degree of match. For example, the candidate search data may be classified into categories 1, 2, 3, 4, and 5 as criteria 1, criteria 2, criteria 3, criteria 4, and criteria 5 under each of the categories 1, 2, 3, 4, and 5 respectively. The profile data within each of the profiles A, H, E, F, and M is in turn classified into categories 1, 2, 3, 4, and 5. However, as shown in FIG. 4, the profile data within some of the profiles may have missing or incomplete information, to be classified into all of the five categories. For example, profile A has data missing for category 5, which is "mutual employee connections." Similarly, profile F has data missing for categories 2 and 5.

Based on the comparison, the processor detects a category by category match between the profile data and the candidate search data and assigns a score to the profile data in each of the categories. The score for each of the profiles A, H, E, F, and M, is calculated as a cumulative score of the category-wise profile data scores for each profile. In the given example, profiles A, H, and E are identified as the profiles having the highest three scores among the profiles A, H, E, F, and M, based on the comparison. Alternatively, the profiles A, H, and E are identified as profiles having scores that meet a threshold value. In an aspect, the processors assigns a score to each of the categories based on pre-defined weights assigned to each of the categories. For example, a particular job position may concern a role that involves handling confidential business information. In such a scenario, higher weightage may be given to criteria falling under the category "mutual employee connections" and "work experience" such that those candidates possessing a greater number of employee mutual connections and an experience of working with highly ethical organizations in the past will be assigned a higher score than those other candidates that do not satisfy these two criteria.

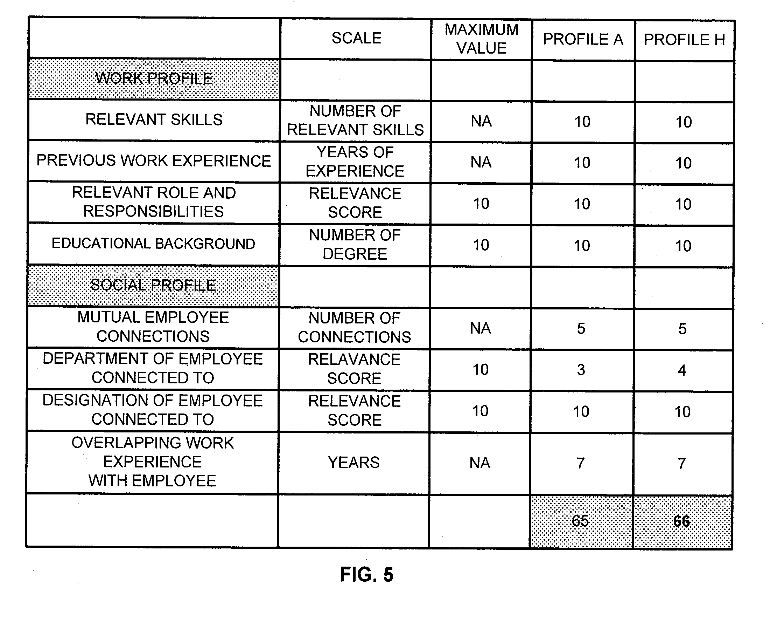

The process of scoring the profile data within the candidate profiles is illustrated with reference to only profiles A and H for simplicity, in the table shown in FIG. 5. As shown, the various categories of classification are broadly divided into "Work profile" and "Social profile." The categories such as "Relevant skills," "Previous work experience," "Roles and Responsibilities," and "Education" are factored under Work Profile. The categories such as "Mutual employee connections," "Department of employee connected to," "Designation of employee connected to," and "Overlapping work experience with employee" are factored under Social Profile. The various categories are then further defined in quantifiable terms as shown under the field "Scale." For example, the category "relevant Skills" is defined in a quantifiable term namely "No. of relevant skills" in order to score the profile data under the particular category "Relevant Skills." The field "Maximum Value" provides a reference value based on which the candidate profile data is scored. In the given example, some of the categories such as "Relevant roles and responsibilities," "Educational background," Department of Employee connected to," and "Designation of employee connected to" are assigned a maximum value (upper limit) of "10" in order that the data in these categories may be assessed in a standardized manner across all the candidate profiles. Based on the values in the "Scale" and "Maximum Value" fields in each category, the candidate profiles are scored and a cumulative score is calculated. In the example as shown for Profile A and Profile H, the cumulative scores indicate that Profile H has a higher score and therefore may be more eligible for the job position than Profile A. Further, different weights may be assigned to the various categories in order to place emphasis on certain categories over certain other categories. For example, the categories under Social Profile may be given more weightage as compared to categories under Work Profile.

Referring back to the example in FIG. 4, the processor then identifies mutual connections for each of the profiles A, H, and E by invoking a record or file showing a mapping of the virtual identities of participants P1, P2, and P3 with actual names of the participants P1, P2, and P3 as provided in the referral program. From the mapping, the processor determines whether any of the profiles A, H, and E have more than one participant connected to it. In the given example, the processor determines that the candidate profile E has two participants, participant P2 and participant P3 connected to it via user accounts U2 and U3 respectively.

Subsequent to identifying the profiles that meet a threshold score, the processor may automatically send a feedback form to a selective number of participants associated with the identified profiles, through e-mail or other messaging services associated with the selected participants. In an aspect, the participants to whom the feedback form is to be sent can be selected based on certain criteria such as the designation of the participant in the organization, the domain in which the participant is employed, the period of employment of the participant in the organization, etc. The selection of the participants to whom the feedback form is sent may be automatically determined based on pre-defined rules. In yet another aspect, the selection of the participants for receiving the feedback form is based on determining a referral history of the participants. The term "referral history" as used herein refers to statistics regarding the outcome of previous referral program that the participant was involved in. Such statistics may include no. of candidates that were hired that were linked to the participant, performance of the hired candidates that were linked to the participant, feedback turnaround time and level of engagement by the participant in providing feedback, etc.

In the given example, the processor may send a feedback form to all the participants P1, P2, and P3 associated with the identified candidate profiles A, H, and E. Alternatively, the processor may select any one or more of the participants P1, P2, and P3 based on certain criteria, For example, the feedback form may be sent to participants associated with the profile that has the highest number of "mutual employee connections." In the given example, candidate profile E is identified as the profile having a mutual employee connection with participants P2 and P3 through user accounts U2 and U3. A feedback form is then sent to the participants P2 and P3 requesting appraisal or recommendation for the candidate associated with the candidate profile E.

FIG. 6 illustrates a graphical representation of the candidate profiles and associated participant connections, in accordance with an embodiment. The graphical representation is rendered on a graphical user interface (GUI) 600 of a profile ranking system. The graphical representation provides a visual indication of various candidates *(vis-a-vis* candidate profiles) and the connections between the candidates and participants connected to the candidates. The graphical representation is generated as shown in FIG. 6 subsequent to performing a search for candidate profiles based on candidate search data. In an embodiment, the graphical representation is in the form of a directed graph 610 having nodes 615, 620 and edges 630. The nodes 615 and 620 represent the candidates and the participants respectively and the edges 630 represent connections between the nodes 615 or 620. In an aspect, the nodes 615 representing the candidates are rendered visually distinct from the nodes 620 representing the participants. In the given example, the nodes 615 each identify a name of the candidate represented by that node. Similarly, the nodes 620 each identify an actual name of the participant represented by that node. The edges 630 represent the connections between the participant nodes 620 and candidate nodes 615. In an embodiment, the nodes 615 representing the candidates are rendered in varying sizes, for example, according to a size proportional to a profile score associated with the candidate profile. Further, the nodes may be visually distinguished using any form of visual effects according to a number of mutual participant connections. For example, a candidate having three or more mutual participant connections can be represented by a "star" symbol next to the node. Any other form of graphical representation including but not limited to graphs, charts, and plots are within the scope of this embodiment.

In an embodiment, the graphical representation is rendered on an interactive interface such that an input can be received by means of receiving a selection of all or a portion of the elements that form the graphical representation. In the given example, the nodes and/or edges may be selected by pointing a cursor over a particular node or edge and invoking an input means of an input device. The input is received as a selection of the particular node or edge that was pointed to and a corresponding function is enabled. In an aspect, receiving a selection of one or more of the candidate nodes via the user interface generates a second graphical representation as shown in FIG. 7.

The second graphical representation 640 in FIG. 7 may be rendered as an inset within the layout of the first graphical representation 610 of FIG. 6. The second graphical representation 640 displays one or more nodes 615 representing the selected one or more candidates and one or more icons 645,646, and 647 representing the participants associated with each of the selected one or more candidates. In an aspect, receiving a selection of any of the icons 645, 646, and 647, automatically invokes a trigger that sends out a feedback form to the participant represented by the selected icon. In an aspect, the feedback form is sent to the participant via an e-mail service or a messaging service to a user device 130 associated with the participant. In the given example, receiving a selection of the node 615 representing candidate "Bane C" invokes a trigger that automatically sends out a feedback form to the participants 645. Alternatively, receiving a selection of the icon 645 representing a participant associated with candidate "Bane C" invokes a trigger that sends a feedback form to the participant represented by the selected icon 645.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment may be implemented using Java, C++, or other object-oriented programming language and development tools. Another embodiment may be implemented in hard-wired circuitry in place of, or in combination with machine readable software instructions.

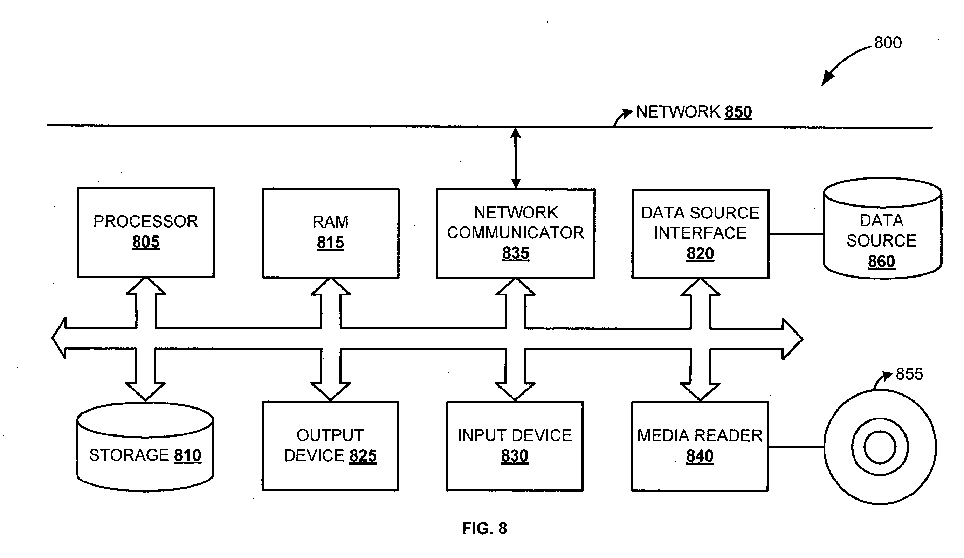

FIG. 8 is a block diagram of an exemplary computer system 800. The computer system 800 includes a processor 805 that executes software instructions or code stored on a computer readable storage medium 855 to perform the above-illustrated methods. The processor 805 can include a plurality of cores. The computer system 800 includes a media reader 840 to read the instructions from the computer readable storage medium 855 and store the instructions in storage 810 or in random access memory (RAM) 815. The storage 810 provides a large space for keeping static data where at least some instructions could be stored for later execution. According to some embodiments, such as some in-memory computing system embodiments, the RAM 815 can have sufficient storage capacity to store much of the data required for processing in the RAM 815 instead of in the storage 810. In some embodiments, all of the data required for processing may be stored in the RAM 815. The stored instructions may be further compiled to generate other representations of the instructions and dynamically stored in the RAM 815. The processor 805 reads instructions from the RAM 815 and performs actions as instructed. According to one embodiment, the computer system 800 further includes an output device 825 (e.g., a display) to provide at least some of the results of the execution as output including, but not limited to, visual information to users and an input device 830 to provide a user or another device with means for entering data and/or otherwise interact with the computer system 800. Each of these output devices 825 and input devices 830 could be joined by one or more additional peripherals to further expand the capabilities of the computer system 800. A network communicator 835 may be provided to connect the computer system 800 to a network 850 and in turn to other devices connected to the network 850 including other clients, servers, data stores, and interfaces, for instance. The modules of the computer system 800 are interconnected via a bus 845. Computer system 800 includes a data source interface 820 to access data source 860. The data source 860 can be accessed via one or more abstraction layers implemented in hardware or software. For example, the data source 860 may be accessed by network 850. In some embodiments the data source 860 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments. One skilled in the relevant art will recognize, however that the embodiments can be practiced without one or more of the specific details or with other methods, components, techniques, etc. In other instances, well-known operations or structures are not shown or described in details.

Although the processes illustrated and described herein include series of steps, it will be appreciated that the different embodiments are not limited by the illustrated ordering of steps, as some steps may occur in different orders, some concurrently with other steps apart from that shown and described herein. In addition, not all illustrated steps may be required to implement a methodology in accordance with the one or more embodiments. Moreover, it will be appreciated that the processes may be implemented in association with the apparatus and systems illustrated and described herein as well as in association with other systems not illustrated.

The above descriptions and illustrations of embodiments, including what is described in the Abstract, is not intended to be exhaustive or to limit the one or more embodiments to the precise forms disclosed. While specific embodiments of, and examples for, the invention are described herein for illustrative purposes, various equivalent modifications are possible within the scope of the invention, as those skilled in the relevant art will recognize. These modifications can be made in light of the above detailed description. Rather, the scope is to be determined by the following claims, which are to be interpreted in accordance with established doctrines of claim construction.

## Claims

1. A computer-implemented method of ranking candidate profiles, the method comprising:
receiving, by the computer, authorization from a participant to access the participant's account on a social networking system, wherein the participant is connected to one or more candidates in the social networking system;
extracting, by the computer, profiles corresponding to the one or more candidates connected to the participant in the social networking system;
classifying profile data contained in the extracted profiles into one or more categories;
scoring the extracted profiles according to a degree of match between a respective categorized profile data and a candidate search data;
ranking the one or more candidates connected to the participant based on the scoring of the extracted profiles; and
providing a list of the one or more ranked candidates.

2. The method of claim 1, further comprising receiving a selection of at least one of the ranked candidates and automatically sending a feedback form to the participant, wherein the method preferably further comprises assigning weights to the one or more categories and scoring the extracted profiles according to the degree of match between profile data in the weighted one or more categories and the candidate search data.

3. The method of claims 1 or 2, wherein classifying the profile data contained in the extracted profiles into one or more categories comprises classifying the profile data into Skills, Work experience, Roles, Education, and Mutual participant connections.

4. The method of any one of claims 1 to 3, wherein scoring the extracted profiles according to the degree of match between the respective categorized profile data and the candidate search data comprises:
comparing the categorized profile data within each of the extracted profiles with the candidate search data; and
scoring each of the extracted profiles based on the degree of match between the categorized profile data within each of the extracted profiles and the candidate search data.

5. A computer-implemented method of ranking candidate profiles, the method comprising:
receiving, by the computer, authorization from a participant to access the participant's account on a social networking system, wherein the participant is connected to one or more candidates in the social networking system;
extracting, by the computer, one or more profiles corresponding to the one or more candidates connected to the participant in the social networking system;
identifying, by the computer, mutual connections of the one or more candidates connected to the participant in the social networking system and one or more other participants associated with the participant;
scoring the extracted profiles based on a respective number of identified mutual connections;
ranking the one or more candidates connected to the participant based on the scoring of the one or more profiles; and
providing a list of the one or more ranked candidates.

6. The method of claim 5, further comprising:
classifying the mutual connections into one or more categories;
assigning weights to the one or more categories; and
scoring the extracted profiles based in part on the weights assigned to the one or more categories.

7. The method of claims 5 or 6 further comprising generating a graphical representation showing at least one of the extracted profiles and the identified mutual connections of the one or more candidates connected to the participant in the social networking system and the one or more other participants, wherein the method preferably further comprises providing a visual indication of the ranking of the extracted profiles.

8. The method of claim 7, further comprising providing the graphical representation for rendering on a graphical user interface (GUI);
receiving a selection of at least one of the extracted profiles;
responsive to receiving the selection, generating another graphical representation showing the selected at least one extracted profile and one or more mutual connections; and
providing the another graphical representation, wherein the method preferably further comprises selectively sending a feedback form to the participant and the one or more other participants connected to the selected at least one extracted profile, wherein the feedback form requests feedback for a candidate associated with the selected at least one extracted profile.

9. A computer-implemented method of graphically representing candidate profiles in a candidate profiles ranking system, the method comprising:
receiving candidate search data;
retrieving a set of candidate profiles from a profiles repository, wherein the set of candidate profiles is extracted from social networking accounts associated with multiple participants of a referral system;
scoring the set of candidate profiles according to a degree of match between the candidate search data and profile data within the set of candidate profiles;
identifying one or more candidate profiles from the set of scored candidate profiles that meet a threshold score;
identifying mutual connections of the one or more identified candidate profiles and the multiple participants;
generating a first graphical representation including the one or more identified candidate profiles and the identified mutual connections;
providing the first graphical representation for display;
receiving a selection of at least one of the one or more identified candidate profiles;
generating a second graphical representation including the selected at least one profile and one or more participants of the multiple participants that are connected to the selected at least one profile; and
providing the second graphical representation for display.

10. The method of claim 9, wherein the first graphical representation comprises a directed graph having nodes and edges wherein the edges represent connections between the nodes, wherein the nodes represent the selected profiles and the multiple participants, wherein preferably the nodes representing the selected profiles are visually distinct from the nodes representing the multiple participants, wherein further preferably the nodes representing the selected profiles are rendered in varying sizes, wherein the size of a node is in proportion to a profile score of the selected profile corresponding to the node.

11. The method of claim 10, further comprising receiving a selection of at least one node and responsive to the selection, sending a feedback form to a participant represented by the selected at least one node.

12. A system operating in a communication network, comprising:
a social networking system; and
a computer comprising a memory to store a program code, and a processor to execute the program code to:
receive candidate search data;
extract a set of candidate profiles from the social networking accounts of multiple participants of a referral system, wherein the set of candidate profiles correspond to candidates connected to the multiple participants in the social networking system;
score the set of candidate profiles according to a degree of match between the candidate search data and profile data within the set of candidate profiles;
identify one or more candidate profiles from the set of scored candidate profiles that meet a threshold score;
identify mutual connections of the one or more identified candidate profiles and the multiple participants;
generate a first graphical representation including the one or more identified candidate profiles and the identified mutual connections;
provide the first graphical representation for display;
receive a selection of at least one of the one or more identified candidate profiles; and
generate a second graphical representation including the selected at least one profile and one or more participants of the multiple participants that are connected to the selected at least one profile; and
providing the second graphical representation for display.

13. The system of claim 12, wherein the candidate search data and the profile data are classified into multiple categories.

14. The system of claims 12 or 13, further wherein the identified mutual connections are further classified into a domain of connected participant, number of mutual participant connections, designation of connected participant, and overlapping work experience with connected participant.

15. The system of any one of claims 12 to 14, wherein the multiple participants are commonly associated with an entity operating the system.
